(19) Europäisches Patentamt

European Patent Office

Office européen des brevets

(11) **EP 0 602 473 B1**

(12) **EUROPÄISCHE PATENTSCHRIFT**

(45) Veröffentlichungstag und Bekanntmachung des Hinweises auf die Patenterteilung:
**06.11.1996 Patentblatt 1996/45**

(51) Int Cl.⁶: **G01S 13/90**

(21) Anmeldenummer: **93119487.2**

(22) Anmeldetag: **03.12.1993**

(54) **Radargerät mit synthetischer Apertur auf der Basis rotierender Antennen**

Synthetic aperture radar based on rotating antennas

Radar à ouverture synthétique à base d'antennes tournantes

(84) Benannte Vertragsstaaten:
**DE FR GB IT NL SE**

(30) Priorität: **16.12.1992 DE 4242532**

(43) Veröffentlichungstag der Anmeldung:
**22.06.1994 Patentblatt 1994/25**

(73) Patentinhaber: **Daimler-Benz Aerospace Aktiengesellschaft**
**81663 München (DE)**

(72) Erfinder: **Klausing, Helmut, Dr.**
**D-83043 Bad Aibling (DE)**

(56) Entgegenhaltungen:
EP-A- 0 083 107          WO-A-88/05547
DE-C- 3 922 086          FR-A- 2 400 714

**Beschreibung**

Aus der DE-PS 39 22 086 (entspricht der EP-A-0 406 522) und der Dissertation von Herrn Dr.-Ing. Helmut Klausing "Realisierbarkeit eines Radars mit synthetischer Apertur durch rotierende Antennen", MBB-Publikation, MBB-UA-1150-89-Pub = OTN-029299, 1989, ist ein Radargerät mit einem Sender und einem Empfänger sowie einer Antenne zum Senden und Empfangen von Radarimpulsen bekannt, wobei die Antenne am Ende eines rotierenden Armes, z. B. eines Hubschrauberrotors oder eines Drehkreuzes oberhalb der Rotorachse, angeordnet ist. Ein solches Radargerät mit synthetischer Apertur auf der Basis rotierender Antennen wird als ROSAR-Gerät bezeichnet. Die Empfangssignale werden demoduliert und zwischengespeichert und anschließend mit Referenzfunktionen korreliert. Diese Referenzfunktionen werden in Abhängigkeit von der Beleuchtungsgeometrie des Radargerätes errechnet bzw. vorgegeben. Parameter für diese Berechnung bzw. Vorgabe sind die zu vermessenden Entfernungsintervalle, die Sendefrequenz, die Länge des rotierenden Dreharmes, der Drehwinkelbereich der Antenne, aus dem Signale rückempfangen werden, die Anzahl der Sendeimpulse sowie die Höhe der rotierenden Antenne über Grund. Das Korrelationsergebnis wird in geeigneter Weise, z.B. auf einem Monitor, angezeigt. Ein derartiges Radargerät kann in Echtzeitnähe im On-line-Betrieb eingesetzt und somit etwa neben der Kartographie, der Hinderniswarnung oder der Landehilfe auch der Zielaufklärung und der Zielverfolgung dienen. Der Prozessor dieses bekannten ROSAR-Gerätes weist mehrere Bausteine auf, um die vielfältigen und komplexen Rechenaufgaben zu unterteilen und damit einen On-Line-Betrieb zu ermöglichen. Bei diesem bekannten Gerät wird das Ergebnis für jedes Entfernungsintervall stets durch Korrelation des Empfangssignales mit einer für dieses Entfernungsintervall gültigen Referenzfunktion erhalten.

In dieser Patentschrift ist nur kurz das Problem der Auflösung eines ROSAR-Gerätes, und zwar nur das sog. Range Curvature-Problem angesprochen. Die Auflösung eines ROSAR-Gerätes in lateraler und radialer Richtung wird durch teilweise miteinander verkoppelte Parameter bestimmt, so durch die Wellenlänge $\lambda$ des Sendesignales und die Länge $L$ des rotierenden Antennenarmes, durch den Öffnungswinkel $\gamma$ der Antenne, die Entfernung $R_{G0}$ zwischen Antenne und Mittellinie des ausgeleuchteten Streifens, die Höhe $H_o$ der Antenne über Grund, die Impulswiederholfrequenz $f_p$ und die Dauer $\tau$ der Sendeimpulse und damit die Zahl $Z_S$ der Impulse pro Aperturlänge $S$, die Dauer $t_e$ der empfangenen Echosignale, die Abtastrate für die Entfernungsintervalle etc..

Mangelnde Auflösung eines ROSAR-Gerätes wird dadurch verursacht, daß sich während der Integrationsdauer des Empfangssignales die Entfernung zum abgetasteten Objekt ändert. Dies hat zur Folge, daß die den einzelnen Entfernungsintervallen zugeordnete Auflösungszellen bzw. Speicherzellen gekrümmt sind. Ist der durch diese Krümmung hervorgerufene Wegunterschied $\Delta R_S$ in radialer Richtung gleich oder größer als die Dimension der Auflösungszelle in ebenfalls radialer Richtung $\Delta R_{Smin} = (c \cdot \tau)/2$, so wird ein Punktziel in zwei benachbarte oder sogar in mehrere benachbarte Auflösungszellen abgebildet, d.h. das Punktziel wird verschmiert abgebildet. Der Signalverlauf des Empfangssignales im Azimut erscheint dann kurvenartig verbogen. Hinsichtlich der Abweichungen sei auf die obige MBB-Publikation, S. 50 - 54, verwiesen.

Der Erfindung liegt die Aufgabe zugrunde, ein ROSAR-Gerät der in Rede stehenden Art so weiterzuentwickeln, daß die Abbildungsfehler kleingehalten werden.

Diese Aufgabe ist gemäß der Erfindung durch die im kennzeichnenden Teil des Patentanspruchs 1 angegebenen Merkmale gelöst.

Demgemäß wird die Prozessorschaltung um einen Komparatorbaustein erweitert, in dem ein aufgrund der Range Curvature-Abweichung verursachter Abbildungsfehler erkannt wird. Hierauf kann dann in der übrigen Prozessorschaltung auf einen zusätzlichen Baustein zur Range Curvature-Korrektur zugegriffen werden, so daß ein an sich mehrdeutiges Punktziel nur einem Entfernungsintervall zugeordnet wird.

Dieser zusätzliche Baustein dient zur Korrektur der Krümmung der abgespeicherten Entfernungsintervalle, d.h. zur Korrektur der Range Curvature-Abweichung, der dann, wenn der Wegfehler größer als eine vorgegebene Schwelle, vorzugsweise größer als die Hälfte der geforderten Radialauflösung ist, den empfangenen Signalanteil einem oder mehreren benachbarten Entfernungsintervallen zuordnet, so daß dieser mit der dort gültigen Referenzfunktion korreliert wird.

Bei der Systemauslegung des ROSAR muß deshalb immer geprüft werden, bis zu welchem maximalen Drehwinkel $\alpha_{RCmax}$ die Beleuchtung eines Zieles für eine vorgegebene Radialauflösung $\Delta R_{Smin}$ ohne die Erfordernis einer Korrektur erfolgen kann. Als maximaler durch die Krümmung hervorgerufene Wegunterschied $\Delta R_{Smax}$ wird zum Beispiel die halbe Länge des Entfernungsintervalls $\Delta R_{Smin}$ zugelassen, d.h. es wird ein Vergleichswert als maximaler zugelassener Wegunterschied in radialer Richtung $\Delta R'_{Smin}$ betrachtet. Dieser Wert kann z.B. die halbe Radialauflösung $\Delta R_{Smin}$ betragen.

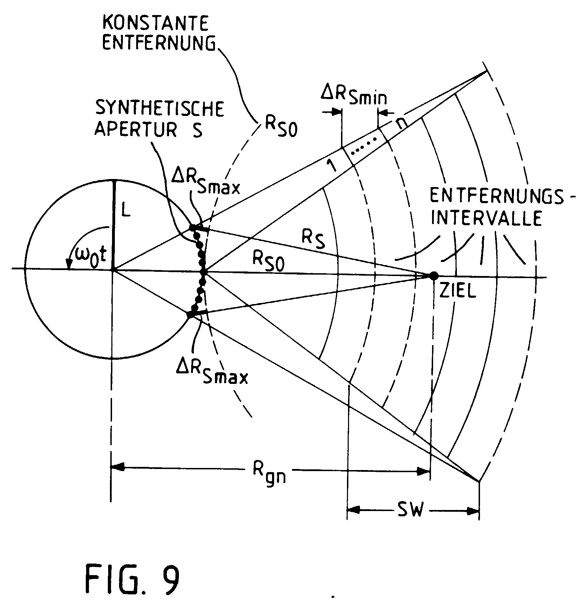

In Fig. 9 ist die Beleuchtungsgeometrie der gekrümmten Auflösungszellen mit den kreisringförmigen Entfernungsintervallen der Länge $\Delta R_{Smin}$ dargestellt. Das Ziel liegt in einer Entfernung am Boden $R_{gn}$ vom Drehpunkt und in einer Entfernung $R_{S0}$ von der Antenne bei dem Drehwinkel $\alpha = 0°$, so daß sich für andere Drehwinkel $\alpha = \omega_o t$ Abweichungen $\Delta R_S = (R_S - R_{S0})$ zu der gekrümmten synthetischen Apertur $S$ ergeben.

Es gilt also:

$$\Delta R_{S_{\max}} \leq \Delta R'_{S_{\min}}$$

mit

$$\Delta R'_{S_{\min}} = \frac{\Delta R_{S_{\min}}}{2} = \frac{c \cdot \tau}{4}.$$

Solange die an den Rändern der synthetischen Apertur $S$ auftretende Schrägentfernungsdifferenz $\Delta R_{S_{\max}}$ kleiner oder gleich dem vorgegebenen Vergleichswert $\Delta R'_{S_{\min}}$ ist, braucht keine Korrektur vorgenommen zu werden. Überschreitet der maximale Wegunterschied $\Delta R_{S_{\max}}$ jedoch den Vergleichswert $\Delta R'_{S_{\min}}$, dann muß korrigiert werden.

Die Vorgabe mit der halben Radialauflösung ist nicht fest definiert, sondern kann, je nach geforderter Genauigkeit, auch kleinere Grenzen beinhalten. Deshalb wird allgemein ein Anpaßfaktor F eingeführt. Es gilt dann für den Vergleichswert:

$$\Delta R'_{S_{\min}} = \frac{\Delta R_{S_{\min}}}{F} = \frac{c \cdot \tau}{2 \cdot F}.$$

Dieser Anpaßfaktor $F$ kann z.B. zwischen 2 und 5 liegen.

Für die maximale Entfernungsdifferenz $\Delta R_{S_{\max}}$ gilt:

$$\Delta R_{S_{\max}} = \sqrt{L^2 + R_{gn}^2 - 2 \cdot L \cdot R_{gn} \cdot \cos(\alpha_S/2) + H_o^2} - \sqrt{(R_{gn} - L)^2 + H_o^2}$$

mit dem Drehwinkelbereich $\alpha_S$:

$$\alpha_S = \frac{S}{L} = \gamma \cdot \left(1 - \frac{L}{R_{gn}}\right).$$

Dabei ist $n$ die Nummer des jeweiligen Entfernungsintervalles.

Solange die Bedingung $\Delta R_{S_{\max}} \leq \Delta R'_{S_{\min}}$ erfüllt ist, braucht keine Korrektur vorgenommen zu werden.

Eine gute Näherung für den maximalen durch die Krümmung hervorgerufenen Wegunterschied $\Delta R_{S_{\max}}$ erhält man für den Fall, daß die Entfernung $R_{gn}$ groß gegenüber der Rotorblattlänge $L$ und der Höhe über Grund $H_o$ ist, zu:

$$\Delta \tilde{R}_{S_{\max}} = L \cdot \left(1 - \cos\left(\frac{\tilde{\alpha}_S}{2}\right)\right) = L \cdot \left(1 - \cos\left(\frac{\gamma}{2}\right)\right)$$

mit

$$\tilde{\alpha}_S = \gamma.$$

Die Erfindung ist in einem Ausführungsbeispiel anhand der Zeichnung näher erläutert. In dieser stellen dar:

Fig. 1          ein Blockschaltbild eines Prozessors eines ROSAR-Gerätes gemäß der Erfindung;

Fig. 2          ein Blockschaltbild einer Komparatorschaltung zum Bestimmen eines durch Range Curvature bedingten Wegfehlers bzw. zum Bestimmen des maximalen zulässigen Drehwinkels $\alpha_{RC_{\max}}$, bei dem gerade noch keine Korrektur notwendig ist;

Fig. 3 und 4   Schaubilder zum Verlauf der maximalen Entfernungsdifferenz $\Delta R_{S_{\max}}$;

| Fig. 5 | ein Schaubild zum Verlauf der maximalen Entfernungsdifferenz $\Delta R_{Smax}$ für eine aktuelle Hubschrauberkonfiguration mit einem Drehkreuz der Länge $L$ oberhalb der Rotorachse ($H_o$ = 300 m, $L$ = 1.5 m) für einen Öffnungswinkel der Antenne in Azimut $\gamma$ von 45° und 70° als Funktion der Entfernung $R_{gn}$; |
|---|---|
| Fig. 6 | ein Schaubild zum Verlauf des maximalen zulässigen Drehwinkels $\alpha_{RCmax}$ für eine aktuelle Hubschrauberkonfiguration mit einem Drehkreuz der Länge $L$ oberhalb der Rotorachse ($H_o$ = 300 m, $L$ = 1.5 m) mit einem Vergleichswert $\Delta R'_{Smin}$ von 0.5 m und 1.0 m als Funktion der Entfernung $R_{gn}$; |
| Fig. 7 | ein Blockschaltbild einer vereinfachten Komparatorschaltung zum Bestimmen eines durch Range Curvature bedingten Wegfehlers bzw. zum Bestimmen des maximalen zulässigen Drehwinkels $\tilde{\alpha}_{RCmax}$, bei dem gerade noch keine Korrektur notwendig ist; |
| Fig. 8a und 8b | zwei Blockschaltbilder zur Berechnung des maximalen Öffnungswinkels der Antenne in Azimut $\gamma_{max}$ ohne die Erfordernis einer Range Curvature-Korrektur; |
| Fig. 9 | Beleuchtungsgeometrie mit den kreisringförmigen Entfernungsintervallen. |

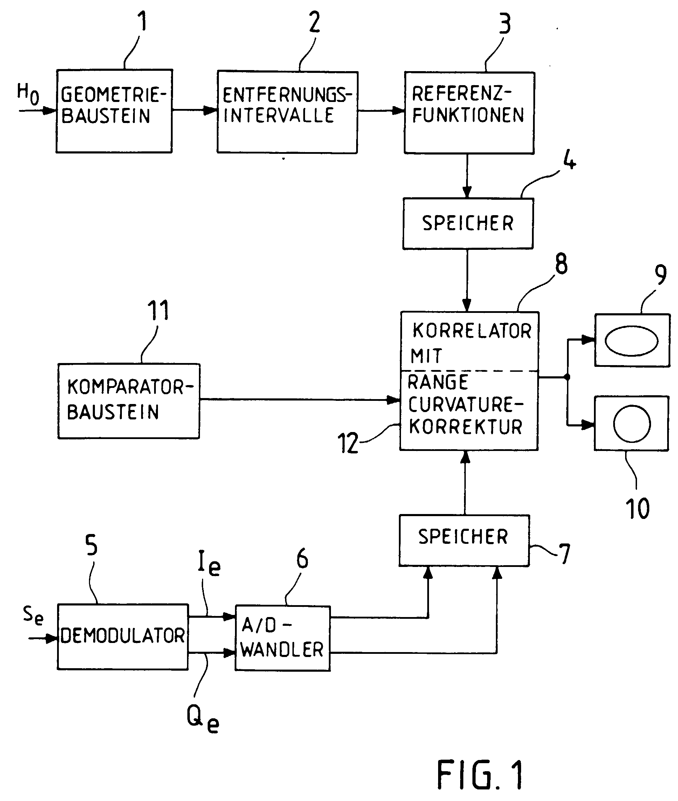

In Fig. 1 ist ein Schaltbild eines Prozessors für ein ROSAR-Gerät gezeigt, wobei in der oberen Hälfte des Blockschaltbildes entsprechend einem ersten Kanal diejenigen Bausteine dargestellt sind, die zur Erzeugung der Referenzfunktionen notwendig sind, und in der unteren Hälfte entsprechend einem zweiten Kanal diejenigen Bausteine, die dem Empfang der am Boden reflektierten Signale dienen.

Im ersten Kanal ist ein Geometriebaustein 1 vorgesehen, der anhand der Höhe $H_0$ der Antenne über Grund und anderer Parameter, insbesondere dem Depressionswinkel, dem Inklinationswinkel und der Länge des Rotorarmes verschiedene Größen und Funktionen berechnet, die einer Prozessorschaltung 2 zum Aufteilen des ausgeleuchteten Gebietes in einzelne Entfernungsintervalle zugeführt werden. Diese Prozessorschaltung 2 ist mit einem Prozessorbaustein 3 verbunden, in dem anhand der Ausgangssignale der Prozessorschaltung 2 die Referenzfunktionen für die einzelnen Entfernungsintervalle berechnet werden. Die für die Korrelation notwendigen Referenzfunktionen werden in einen Speicher 4 übertragen.

Im zweiten Kanal werden die Echosignale $S_e$ einem Quadraturdemodulator 5 zugeführt und in die Inphase- und Quadraturkomponente $I_e$ bzw. $Q_e$ zerlegt. Die beiden Komponenten werden Analog-Digital-Wandlern 6 zugeführt, an deren Ausgang dann diskrete Abtastwerte vorliegen. Diese komplexen Echosignale werden dann für die Korrelation in einen Speicher 7 übertragen. In diesem Speicher 7 werden die Empfangssignale $S_E$ für die jeweiligen Entfernungsintervalle aus den zu diesen Intervallen zugehörigen Echossignalen zusammengefügt. Die jeweils in den Speichern 4 bzw. 7 abgelegten Signale werden synchron einem Korrelator 8 zugeführt und korreliert. Das Korrelationsergebnis wird an einer Anzeige, z.B. einem Monitor 9, dargestellt und/oder weiter einem Auswertegerät 10 zugeführt.

Hinsichtlich der näheren Funktion, insbesondere hinsichtlich der Aufteilung der Referenzfunktionen auf einzelne Entfernungsintervalle und deren Berechnung wird auf die oben genannte DE-PS 39 22 086 verwiesen.

Zusätzlich zu den beschriebenen Prozessorbausteinen ist noch ein Komparatorbaustein 11 und eine Prozessorschaltung zur Korrektur der Range Curvature Abweichung 12 vorgesehen. Dieser Komparatorbaustein vergleicht den maximalen Wegunterschied $\Delta R_{Smax}$ mit dem Vergleichswert $\Delta R'_{Smin}$ und greift, wenn der durch Range Curvature bedingte Wegfehler größer als eine bestimmte Schwelle ist, auf die Schaltung 12 zur Range Curvature-Korrektur zu und verschiebt dort die entsprechenden Empfangssignale so, daß eine Korrelation mit Referenzfunktionen aus benachbarten, d.h. etwa um den Wegfehler entfernten Entfernungsintervallen erfolgt und der Range Curvature-Fehler kompensiert wird. Zur Reduzierung des Rechenaufwandes wird die Range Curvature-Korrektur im Rahmen des Korrelationsprozesses vorgenommen. Wird die Korrelation zum Beispiel im Frequenzbereich vorgenommen, so erfolgt nach der Fouriertransformation der jeweiligen Empfangssignale eine Range Corvature-Korrektur, d.h. noch vor der Multiplikation mit den Fouriertransformierten Referenzfunktionen und der anschließenden Rücktransformation in den Zeitbereich.

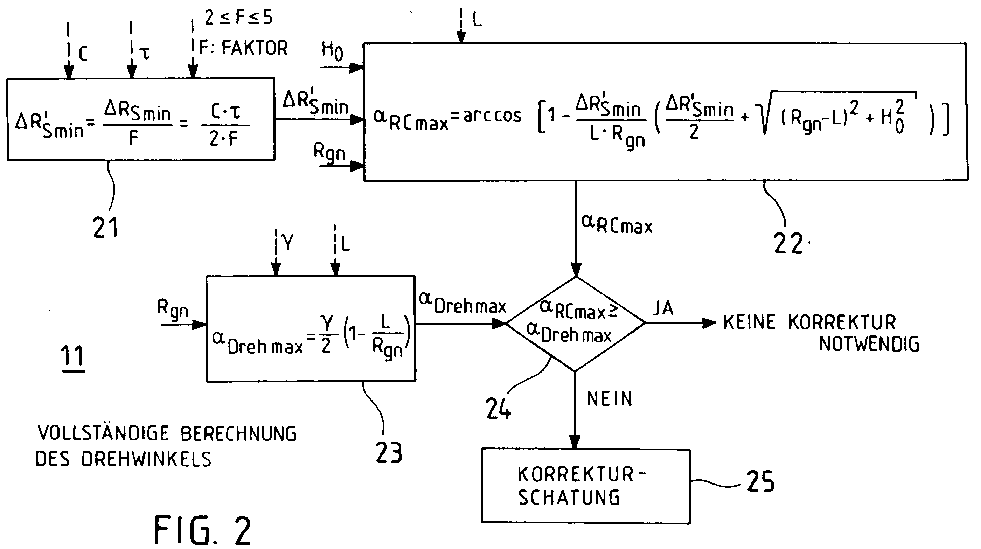

Die Berechnung des maximalen Drehwinkels, bis zu dem keine bzw. ab dem eine Korrektur erforderlich ist, erfolgt in dem Baustein 11, dessen Schaltung in Fig. 2 dargestellt ist. Mit den Eingangsgrößen Lichtgeschwindigkeit $c$, Sendeimpulsdauer $\tau$ und dem oben erwähnten Anpaßfaktor $F$ wird der Vergleichswert $\Delta R'_{Smin}$

$$\Delta R'_{S_{min}} = \frac{c \cdot \tau}{2 \cdot F}$$

in einem Baustein 21 berechnet. Mit diesem Ergebnis wird unter Zuhilfenahme der Höhe $H_o$ über Grund, des jeweiligen Entfernungsintervalles $R_{gn}$ und der Rotorlänge $L$ des die Antenne tragenden Armes in einem Rechnerbaustein 22 der

maximal zulässige Drehwinkel $\alpha_{RCmax}$, bei dem gerade noch keine Korrektur notwendig ist, nach folgender Formel berechnet:

$$\alpha_{RC\max} = \arccos\left( 1 - \frac{\Delta R'_{S\min}}{L \cdot R_{gn}} \cdot \left( \frac{\Delta R'_{S\min}}{2} + \sqrt{(R_{gn}-L)^2 + H_o^2} \right) \right).$$

In einem weiteren Baustein 23 wird aus $R_{gn}$, $L$ und dem Öffnungswinkel $\gamma$ der Antenne in Azimut der tatsächliche maximale Drehwinkel

$$\alpha_{Drehmax} = \frac{\gamma}{2} \cdot \left( 1 - \frac{L}{R_{gn}} \right)$$

berechnet und in einem Komparator 24 mit $\alpha_{RCmax}$ verglichen. Ist $\alpha_{RCmax}$ größer, so ist keine Korrektur notwendig, ist er kleiner, so wird in einer Korrekturschaltung 25 korrigiert, in der der Drehwinkel vollständig berechnet wird und entsprechend in den Baustein 12 eingegriffen.

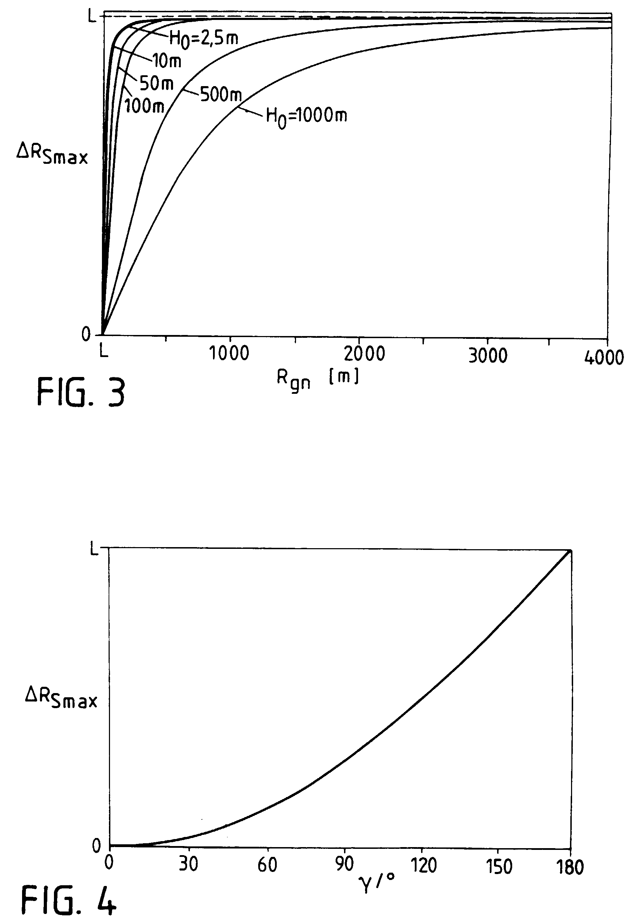

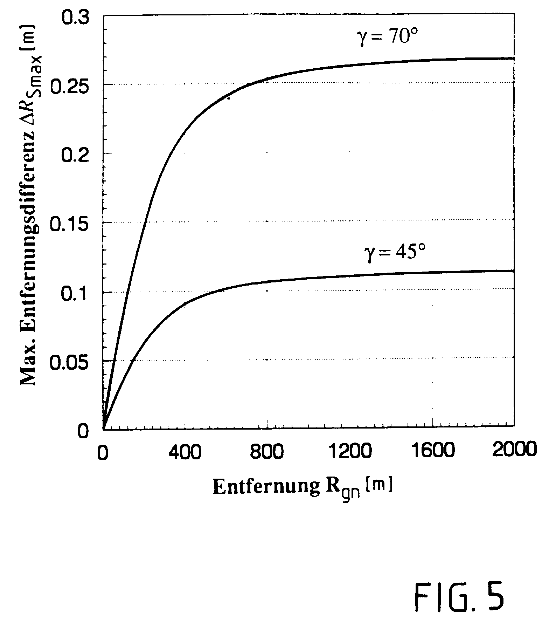

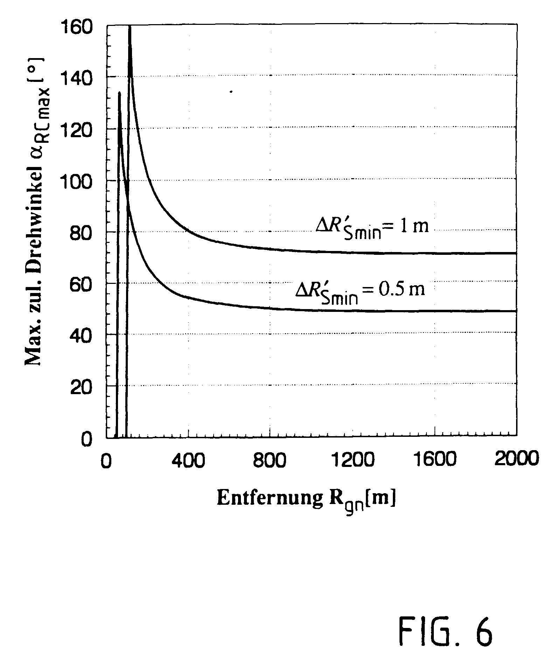

Aus den Figuren 3,4 und 5 ist der Verlauf der maximalen Abweichung $\Delta R_{Smax}$ als Funktion der Entfernung am Boden $R_{gn}$ und mit der Höhe $H_o$ über Grund als Parameter (Fig. 3), mit dem Öffnungswinkel $\gamma$ als Parameter (Fig. 4) bzw. als Funktion des Öffnungswinkels $\gamma$ (Fig. 5) ersichtlich. Die maximal mögliche Abweichung bei $\gamma = 180°$ beträgt danach etwa eine Rotorlänge $L$. In Fig. 6 ist der maximal zulässige Drehwinkel $\alpha_{RCmax}$ über der Entfernung $R_{gn}$ mit $\Delta R'_{Smin}$ als Parameter aufgetragen. Für die Diagramme der Fig. 5 und 6 ist $H_o = 300$ m und $L = 1.5$m.

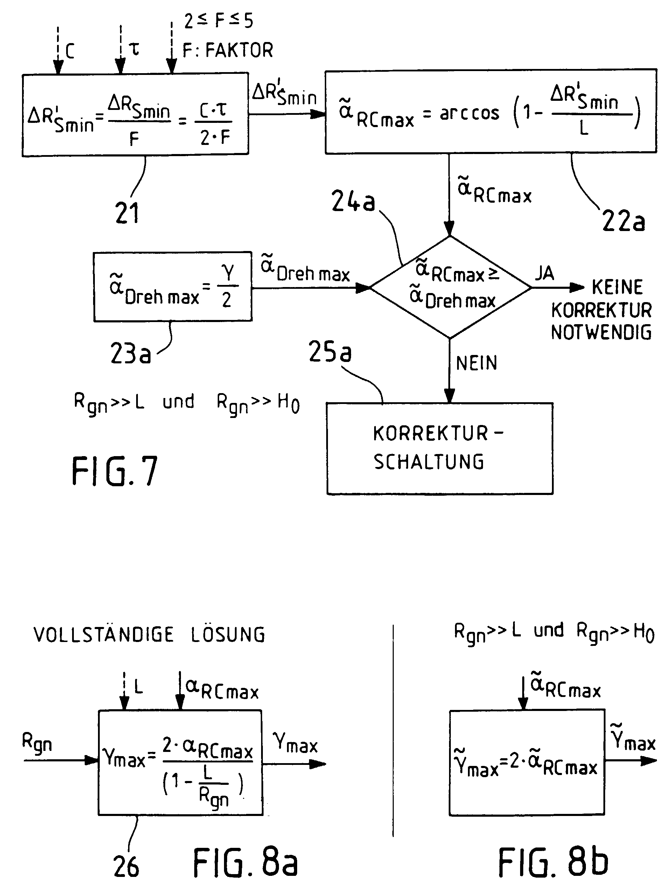

Neben der oben angegebenen vollständigen Lösung für die Berechnung des Drehwinkels genügt dann, wenn $R_{gn}$ groß gegenüber der Rotorblattlänge $L$ und der Höhe über Grund $H_o$ ist, eine Abschätzung gemäß Fig. 7. Wie bei der Schaltung gemäß Fig. 2 wird in dem Baustein 21 der Vergleichswert $\Delta R'_{Smin}$ berechnet. In einem Baustein 22a wird der Schätzwert für den Drehwinkel

$$\tilde{\alpha}_{RC\max} = \arccos\left( 1 - \frac{\Delta R'_{S\min}}{L} \right)$$

gebildet und mit dem Näherungswert für den tatsächlichen maximalen Drehwinkel aus Baustein 23a

$$\tilde{\alpha}_{Drehmax} = \frac{\gamma}{2}$$

in einem Komparator 24a verglichen. Wenn der Schätzwert $\tilde{\alpha}_{RCmax}$ gleich oder größer als $\tilde{\alpha}_{Drehmax}$ ist, ist keine Korrektur notwendig, ist er kleiner, dann wird mit Hilfe einer einfachen, bevorzugt fest verdrahteten Schaltung 25a korrigiert. Die Schaltungen gemäß den Fig. 2 und 7 bestehen nebeneinander, wobei die einfache Schaltung gemäß Fig. 7 bevorzugt eingesetzt und erst auf die Schaltung nach Fig. 2 umgeschaltet wird, wenn die vollständige Lösung erforderlich ist.

Die Berechnung des maximalen Öffnungswinkels der Antenne in Azimut $\gamma_{max}$ ohne die Erfordernis einer Range Curvature-Korrektur erfolgt in einer Schaltung gemäß Fig. 8a und 8b. Aus dem maximal zulässigen Drehwinkel $\alpha_{RCmax}$, bei dem gerade noch keine Korrektur notwendig ist, kann dann der zugehöriger Öffnungswinkel $\gamma_{max}$ berechnet werden. Es gilt (Fig. 8a):

$$\gamma_{max} = \frac{2 \cdot \alpha_{RCmax}}{(1 - \frac{L}{R_{gn}})}.$$

Für Entfernungen $R_{gn}$, die groß gegen die Rotorlänge $L$ und Höhe $H_o$ sind, gilt (Fig. 8b):

$$\tilde{\gamma}_{max} = 2 \cdot \bar{\alpha}_{RCmax}.$$

Solange diese Bedingungen erfüllt sind, braucht keine Range Curvature-Korrektur vorgenommen zu werden.

Der Zusammenhang soll anhand zweier Beispiele verdeutlicht werden:

1. Für $\gamma = 70°$, L = 1.5 m, $\Delta R_{Smin} = 1.0$ m, F = 2 folgt mit $\Delta R'_{Smin} = \Delta R_{Smin}/2 = 0.5$ m für den maximal zulässigen Drehwinkel , $\tilde{\alpha}_{RCmax}$, bei dem gerade noch keine Korrektur notwendig ist:

$$\tilde{\alpha}_{RCmax} = \arccos\left(1 - \frac{\Delta R'_{Smin}}{L}\right) \approx 48.2°.$$

Daraus folgt der maximal zulässige Öffnungswinkel $\tilde{\gamma}_{max}$ zu

$$\tilde{\gamma}_{max} = 2 \cdot \tilde{\alpha}_{RCmax} = 96.4°.$$

Da der Wert für $\gamma$ zu 70° vorgegeben wurde, der maximale Öffnungswinkel ohne die Erfordernis einer Korrektur $\tilde{\gamma}_{max}$ aber 96.4° betragen darf, muß nicht korrigiert werden.

2. Für $\gamma = 70°$, L = 1.5 m, $\Delta R_{Smin} = 0.3$ m, F = 2 folgt mit $\Delta R'_{Smin} = \Delta R_{Smin}/2 = 0.15$ m für den maximal zulässigen Drehwinkel $\tilde{\alpha}_{RCmax}$, bei dem gerade noch keine Korrektur notwendig ist:

$$\tilde{\alpha}_{RCmax} = \arccos\left(1 - \frac{\Delta R'_{Smin}}{L}\right) \approx 25.8°.$$

Daraus folgt der maximal zulässige Öffnungswinkel $\tilde{\gamma}_{max}$ zu

$$\tilde{\gamma}_{max} = 2 \cdot \tilde{\alpha}_{RCmax} = 51.6°.$$

Da der Wert für $\gamma$ zu 70° vorgegeben wurde, der maximale Öffnungswinkel ohne die Erfordernis einer Korrektur $\tilde{\gamma}_{max}$ aber nur 51.6° betragen darf, muß korrigiert werden.

**Patentansprüche**

1. Radargerät mit zumindest einem Sender und einem Empfänger, deren zumindest eine Antenne zum Senden und Empfangen von Radarimpulsen am Ende eines rotierenden Armes angeordnet ist, mit einer Einrichtung zum Demodulieren und Zwischenspeichern der Empfangssignale, mit Einrichtungen zum Bilden und Speichern von Referenzfunktionen in Abhängigkeit von der Beleuchtungsgeometrie des Radargerätes, der zu vermessenden Entfernungsintervalle, der Drehwinkelbereiche, der Sendeimpulse sowie der Höhe der rotierenden Antenne über Grund, mit einer Prozessorschaltung zum Aufteilen des von der Antenne ausgeleuchteten Entfernungsbereiches in einzelne Entfernungsintervalle und zum Festlegen der Referenzfunktionen in diesen Entfernungsintervallen, und mit einem Korrelator zum Korrelieren der Empfangssignale mit den Referenzfunktionen sowie einem Anzeigegerät für das Korrelationsergebnis, dadurch gekennzeichnet, daß die Prozessorschaltung eine Komparatorschaltung (11) zum Abschätzen der durch die Bewegung der Antenne hervorgerufene Verzerrung ($\Delta R_S$) der abgespeicherten Entfernungsintervalle aufweist, und daß diese Schaltung (11) auf eine Schaltung (12) zur Korrektur der Krümmung der abgespeicherten Entfernungsintervalle, d.h. zur Korrektur der Range Curvature-Abweichung einwirkt.

2. Radargerätnach Anspruch 1, dadurch gekennzeichnet, daß die Komparatorschaltung (11) dann, wenn der Verzerrungsfehler größer als eine bestimmte Schwelle ($\Delta R'_{Smin}$), insbesondere größer als die Hälfte der geforderten Radialauflösung ($\Delta R_{Smin}$) ist, eine Korrelation des Empfangssignales in einem benachbarten Entfernungsintervall veranlaßt.

3. Radargerät nach Anspruch 2, dadurch gekennzeichnet, daß die Komparatorschaltung (11) die vorgegebene Schwelle ($\Delta R'_{Smin}$) mit der maximal auftretenden Abweichung ($\Delta R_{Smax}$) d.h. den Unterschied der Entfernungen zwischen Ziel und dem Bogen der synthetischen Apertur bei einem Drehwinkel der Antenne von 0° bzw. dem maximal zulässigen Drehwinkel, vergleicht, und daß der Ausgang der Komparatorschaltung (11) auf die Schaltung (12) zur Korrektur der Range Curvature-Abweichung zugreift und damit die Empfangssignale aus dem momentan bearbeiteten Entfernungsintervall in ein benachbartes oder mehrere benachbarte Entfernungsintervalle verschiebt.

4. Radargerät nach einem der vorhergehenden Ansprüche, dadurch gekennzeichnet, daß die Komparatorschaltung (11) eine erste Rechenschaltung (21 bis 25) aufweist, in der der maximal zulässige Drehwinkel ($\alpha_{RCmax}$) der Antenne, bis zu dem keine Korrektur erforderlich ist, und der tatsächliche maximale Drehwinkel ($\alpha_{Drehmax}$) berechnet und in einem Vergleicher (24) diese Werte miteinander verglichen werden sowie eine Korrekturschaltung (25) aktiviert wird, wenn der tatsächliche Drehwinkel größer als der maximal zulässige ist.

5. Radargerät nach Anspruch 4, dadurch gekennzeichnet, daß in der Korrekturschaltung (25) der maximale Öffnungswinkel ($\gamma_{max}$) der Antenne in Azimut, bei dem gerade noch keine Korrektur notwendig ist, vollständig berechnet wird zu

$$\gamma_{max} = \frac{2 \cdot \alpha_{RCmax}}{(1 - \frac{L}{R_{gn}})}$$

mit $\alpha_{RCmax}$ dem tatsächlichen maximalen Drehwinkel ohne die Erfordernis einer Korrektur, und daß bei größeren Öffnungswinkeln eine Korrektur erfolgt.

6. Radargerät nach einem der vorhergehenden Ansprüche, dadurch gekennzeichnet, daß die Komparatorschaltung (11) eine zweite Rechenschaltung (21, 22a bis 25a) aufweist, in der dann, wenn die Entfernung am Boden ($R_{gn}$) zwischen dem Drehpunkt und dem gerade beleuchteten Ziel wesentlich größer als die Rotorlänge ($L$) des die Antenne tragenden rotierenden Armes und die Höhe ($H_o$) der Antenne über Grund ist, für den maximal zuzlässigen Drehwinkel ein Schätzwert ($\tilde{\alpha}_{RCmax}$ gebildet und dieser Schätzwert mit dem halben Öffnungswinkel ($\gamma/2$) der Antenne in Azimut verglichen wird, und daß dann, wenn der halbe Öffnungswinkel größer als der Schätzwert ist, eine Korrektursachaltung (25a) aktiviert wird.

7. Radargerät nach einem der Ansprüche 4 bis 6, dadurch gekennzeichnet, daß in der Komparatorschaltung (11) zunächst die zweite Rechenschaltung (21, 22a bis 25a) aktiviert ist und erst auf die erste Rechenschaltung (21 bis 25) umgeschaltet wird, wenn die in Anspruch 6 aufgeführte Bedingung nicht mehr gilt.

## Claims

1. Radar unit comprising at least one transmitter and one receiver, their at least one antenna for transmitting and receiving radar pulses being arranged at the end of a rotating arm, with a device for demodulation and intermediate storage of receive signals, with devices for forming and storing reference functions in dependence of the illumination geometry of the radar unit, the range intervals to be measured, the rotary angle ranges, the transmit pulses as well as the height above ground of the rotating antenna, with a processor circuit for splitting the range area illuminated by the antenna into individual range intervals and for setting the reference functions in these range intervals, and with a correlator for correlation of receive signals with the reference functions, as well as a display unit for the correlation result, **characterised in that** the processor circuit comprises a comparator circuit (11) for estimating the distortion ($\Delta R_S$) of stored range intervals caused by movement of the antenna, and that this circuit (11) acts on a circuit (12) for correcting the curvature of the stored range intervals for correcting the range curvature deviation.

2. Radar unit according to Claim 1, **characterised in that** the comparator circuit (11) initiates a correlation of the receive signal in an adjacent range interval if the distortion error is greater than a specified threshold ($\Delta R'_S$), in

particular greater than half the required radial resolution (A$R_{smin}$).

3. Radar unit according to Claim 2, **characterised in that** the comparator circuit (11) compares the given threshold ($\Delta R'_{smin}$) with the maximum occurring deviation ($\Delta R_{smax}$), i.e. the difference in ranges between target and the arc of the synthetic aperture at a rotary angle of the antenna of 0° or the maximum admissible rotary angle, and that the output of the comparator circuit (11) utilises the circuit (12) for correction of the range curvature deviation and thus displaces the receive signals from a momentarily processed range interval into one or a plurality of adjacent range intervals.

4. Radar unit according to one of the above claims, **characterised in that** the comparator circuit (11) comprises a first computer circuit (21 to 25) in which the maximum admissible rotary angle ($\alpha_{RCmax}$) of the antenna, up to which no correction is required, and the actual maximum rotary angle ($\alpha_{Drehmax}$) are calculated, and these values are compared relative to each other in a comparator (24), and a correction circuit (25) is activated when the actual rotary angle is greater than the maximum admissible one.

5. Radar unit according to Claim 4, **characterised in that** in the correction circuit (25) the maximum opening angle ($\gamma_{max}$) of the antenna in azimuth at which a correction is not yet necessary is calculated to be

$$\gamma_{max} = \frac{2 \times \alpha_{RCmax}}{(1 - \frac{L}{R_{gn}})}$$

where $\alpha_{RCmax}$ is the actual maximum rotary angle without requiring a correction, and with a correction being made with larger opening angles.

6. Radar unit according to one of the above claims, **characterised in that** the comparator circuit (11) comprises a second computer circuit (21, 22a to 25a) wherein, when the range on the ground $(R_{gn})$ between the rotary point and a just illuminated target is considerably greater than the rotor length (L) of the antenna-supporting rotary arm and the height ($H_o$) of the antenna above ground, an estimated value ($\alpha_{RCmax}$) for the maximum admissible rotary angle is formed, and this estimated value is compared to half the opening angle ($\gamma/2$) of the antenna in azimuth, and a correcting circuit (25a) is activated if half the opening angle is greater than the estimated value.

7. Radar unit according to one of Claims 4 to 6, **characterised in that** in the comparator circuit (11) initially the second computer circuit (21, 22a to 25a) is activated, and a switch to the first computer circuit (21 to 25) is made only if the condition of Claim 6 no longer applies.

**Revendications**

1. Appareil radar avec au moins un émetteur et un récepteur auxquels est associée au moins une antenne montée à l'extrémité d'un bras tournant, pour l'émission et la réception d'impulsions radar, avec un dispositif de démodulation et de mémorisation intermédiaire des signaux reçus, avec des dispositifs pour générer et mémoriser des fonctions de référence en relation avec la géométrie d'éclairement de l'appareil radar, l'intervalle de distance dans lequel la mesure est effectuée, les plages angulaires de rotation, les impulsions émises ainsi que la hauteur de l'antenne tournante par rapport au sol, avec un circuit de traitement pour diviser la plage de distances éclairée par l'antenne en intervalles de distance discrets et pour définir les fonctions de référence dans lesdits intervalles de distance, avec un corrélateur pour carreler les signaux reçus et les fonctions de référence ainsi qu'avec un appareil d'affichage du résultat de la corrélation, caractérisé en ce que le circuit de traitement présente un circuit comparateur (11) pour évaluer la déformation ($\Delta R_S$) des intervalles de distance mémorisés, due au mouvement de l'antenne, et en ce que ledit circuit (11) pilote un circuit de traitement (12) de correction de la courbure des intervalles de distance mémorisés, c'est-à-dire de correction de l'écart de courbure de l'intervalle.

2. Appareil radar selon la revendication 1, caractérisé en ce que, lorsque la déformation est supérieure à un seuil ($\Delta R'_{Smin}$) déterminé, notamment supérieure à la moitié de la résolution ($\Delta R_{Smin}$) radiale exigée, le circuit comparateur (11) déclenche une corrélation du signal reçu dans un intervalle de distance voisin.

3. Appareil radar selon la revendication 2, caractérisé en ce que le circuit comparateur (11) compare le seuil ($\Delta R'_{Smin}$)

prédéterminé avec l'écart maximal ($\Delta R_{max}$) apparaissant, c'est-à-dire la différence entre les distances entre la cible et l'arc de l'ouverture dynamique pour un angle de rotation de l'antenne de 0°ou pour l'angle de rotation maximal et en ce que la sortie du circuit comparateur (11) accède au circuit (12) de correction de l'écart de courbure de l'intervalle et décale les signaux reçus de l'intervalle de distance en cours de traitement dans un intervalle de distance voisin ou dans plusieurs intervalles de distance voisins.

4. Appareil radar selon l'une des revendications précédentes, caractérisé en ce que le circuit comparateur (11) comporte un premier circuit de calcul (21 à 25), dans lequel l'angle de rotation ($\alpha_{RCmax}$) maximal admissible de l'antenne, jusqu'auquel aucune correction n'est nécessaire, et l'angle de rotation maximal effectif ($\alpha_{Drehmax}$) sont calculés, ces valeurs sont comparées les unes aux autres dans un comparateur (24) et un circuit de correction (25) est activé, lorsque l'angle de rotation effectif est supérieur à l'angle maximal admissible.

5. Appareil radar selon la revendication 4, caractérisé en ce que l'on calcule dans le circuit de correction (25) l'angle d'ouverture ($\gamma_{max}$) maximal en azimut de l'antenne, pour lequel aucune correction n'est encore nécessaire, conformément à

$$\gamma_{max} = \frac{2 * \alpha_{RCmax}}{(1 - L/R_{gn})}$$

avec $\alpha_{RCmax}$ l'angle de rotation maximal effectif sans qu'il soit nécessaire de procéder à une correction, et en ce que l'on procède à une correction pour des angles de rotation supérieur.

6. Appareil radar selon l'une des revendications précédentes, caractérisé en ce que le circuit comparateur (11) présente un second circuit de calcul (21, 22a à 25a) dans lequel, lorsque la distance au sol $R_{gn}$ entre le point de rotation et la cible actuellement éclairée est nettement supérieure à la longueur ($L$) du bras tournant portant l'antenne et à la hauteur ($H_0$) de l'antenne au-dessus du sol, on calcule une valeur estimative ($\alpha_{RCmax}$) pour l'angle de rotation maximal admissible et on compare cette valeur estimative au demi angle d'ouverture ($\gamma/2$) de l'antenne en azimut et en ce que, lorsque le demi angle d'ouverture est supérieur à la valeur estimative, on active un circuit de correction (25a).

7. Appareil radar selon l'une des revendications 4 à 6, caractérisé en ce que, dans le circuit comparateur (11), le second circuit de calcul (21, 22a à 25a) est d'abord activé et que la commutation vers le premier circuit de calcul (21 à 25) a lieu uniquement lorsque la condition indiquée dans la revendication 6 n'est plus vérifiée.

FIG. 1

$$\Delta R'_{S\,min} = \frac{\Delta R_{S\,min}}{F} = \frac{C \cdot \tau}{2 \cdot F}$$

21

$$\alpha_{RC\,max} = \arccos\left[1 - \frac{\Delta R'_{S\,min}}{L \cdot R_{gn}}\left(\frac{\Delta R'_{S\,min}}{2} + \sqrt{(R_{gn}-L)^2 + H_0^2}\right)\right]$$

22

$$\alpha_{Drehmax} = \frac{\gamma}{2}\left(1 - \frac{L}{R_{gn}}\right)$$

23

$\alpha_{RC\,max} \geq \alpha_{Drehmax}$

24

KEINE KORREKTUR NOTWENDIG

JA

NEIN

KORREKTUR-SCHATUNG

25

11

VOLLSTÄNDIGE BERECHNUNG DES DREHWINKELS

# FIG. 2

FIG. 3

FIG. 4

FIG. 5

FIG. 6

$$2 \leq F \leq 5$$
$$F : \text{FAKTOR}$$

$C$    $\tau$

$$\Delta R'_{Smin} = \frac{\Delta R_{Smin}}{F} = \frac{C \cdot \tau}{2 \cdot F}$$

$\Delta R'_{Smin}$

$$\tilde{\alpha}_{RCmax} = arccos \left(1 - \frac{\Delta R'_{Smin}}{L}\right)$$

21

$\tilde{\alpha}_{RCmax}$

24a

22a

$$\tilde{\alpha}_{Dreh\,max} = \frac{\gamma}{2}$$

$\tilde{\alpha}_{Dreh\,max}$

$$\tilde{\alpha}_{RCmax} \geq \tilde{\alpha}_{Dreh\,max}$$

JA

**KEINE KORREKTUR NOTWENDIG**

23a

25a

NEIN

**KORREKTUR – SCHALTUNG**

$$R_{gn} \gg L \quad und \quad R_{gn} \gg H_0$$

# FIG.7

VOLLSTÄNDIGE LÖSUNG

$L$   $\alpha_{RCmax}$

$R_{gn}$

$$\gamma_{max} = \frac{2 \cdot \alpha_{RCmax}}{\left(1 - \frac{L}{R_{gn}}\right)}$$

$\gamma_{max}$

26    FIG. 8a

$$R_{gn} \gg L \quad und \quad R_{gn} \gg H_0$$

$\tilde{\alpha}_{RCmax}$

$$\tilde{\gamma}_{max} = 2 \cdot \tilde{\alpha}_{RCmax}$$

$\tilde{\gamma}_{max}$

FIG. 8b

FIG. 9